Europäisches Patentamt

**European Patent Office**

**Office européen des brevets**

(19)

(11) Numéro de publication: **0 120 763 B1**

(12)

# FASCICULE DE BREVET EUROPEEN

(45) Date de publication du fascicule du brevet:
17.09.86

(51) Int. Cl.⁴: **B 60 J 5/10,** B 60 R 5/04

(21) Numéro de dépôt: **84400510.8**

(22) Date de dépôt: **13.03.84**

(54) **Hayon arrière de véhicule et véhicule équipé de ce hayon.**

(30) Priorité: **25.03.83 FR 8304974**

(43) Date de publication de la demande:
**03.10.84 Bulletin 84/40**

(45) Mention de la délivrance du brevet:
**17.09.86 Bulletin 86/38**

(84) Etats contractants désignés:
**DE GB IT**

(56) Documents cités:
**EP - A - 0 028 184**
**EP - A - 0 041 016**
**DE - A - 3 145 210**
**FR - A - 1 169 751**
**FR - A - 2 364 787**
**US - A - 4 222 600**
**US - A - 4 275 915**

**PATENTS ABSTRACTS OF JAPAN, vol. 6, no. 213
(M-167)[1091], 26 octobre 1982
PATENTS ABSTRACTS OF JAPAN, vol. 7, no. 29
(M-191)[1174], 5 février 1983
PATENTS ABSTRACTS OF JAPAN, vol. 6, no. 224
(M-170)[1102], 9 novembre 1982**

(73) Titulaire: **AUTOMOBILES PEUGEOT, 75, avenue de la
Grande Armée, F-75116 Paris (FR)**
Titulaire: **AUTOMOBILES CITROEN, 62 Boulevard
Victor-Hugo, F-92200 Neuilly-sur-Seine (FR)**

(72) Inventeur: **Taunay, Claude, 5 rue Poulhan, F-78140 Velizy
(FR)**
Inventeur: **Haigazian, Serge, 14 rue Général Leclerc,
F-92130 Issy Les Moulineaux (FR)**
Inventeur: **Poiraton, Gérard, 11 rue la Juvinière,
F-78350 Les Loges en Josas (FR)**

(74) Mandataire: **Durand, Yves Armand Louis et al, Cabinet Z.
Weinstein 20, Avenue de Friedland, F-75008 Paris (FR)**

## Description

La présente invention se rapporte d'une manière générale aux portes équipant les véhicules et concerne plus particulièrement la porte ou hayon arrière d'un véhicule automobile.

Il existe actuellement de nombreux véhicules automobiles équipés d'une porte arrière ou hayon articulé sur la caisse du véhicule et permettant l'accès au coffre à bagages. Ces hayons se composent généralement d'une vitre qui est montée sur une structure formant en quelque sorte le châssis de a porte (US-A-4 222 600). Ce châssis peut entourer totalement ou partiellement la vitre. Il existe même des hayons simplement constitués d'une vitre sans châssis et sur laquelle sont directement fixées la serrure permettant de fermer le hayon et les charnières d'articulation du hayon sur la caisse du véhicule (DE-A-3 145 210).

Mais, dans un cas comme dans l'autre, les hayons actuellement connus présentent un certain nombre de défauts inhérents à leur poids excessif, à leur fragilité relative ou à leur complexité de fabrication.

La présente invention a pour but de remédier à ces inconvénients en proposant un hayon arrière pour véhicule qui est d'une conception nouvelle, présente toutes les qualités requises de légèreté et de rigidité et qui, au surplus, possède des fonctions supplémentaires et autres que la fonction habituelle de fermeture ou d'ouverture de l'arrière d'un véhicule automobile.

A cet effet, l'invention a pour objet une porte de véhicule tel que par exemple le hayon arrière d'un véhicule automobile et du type comprenant une partie vitrée solidaire d'une structure formant châssis de porte, pourvue d'au moins une surface en saillie vers l'intérieur de l'habitacle du véhicule pour constituer un aménagement fonctionnel de celui-ci tel que par exemple un support d'objets et/ou un panneau de fermenture du coffre à bagages.

Ainsi, comme on le comprend, la surface en saillie précitée se développe à l'intérieur du véhicule dans un plan différent de celui de la structure, ce qui permet non seulement de rigidifier cette dernière mais aussi de conférer au hayon des fonctions supplémentaires de support d'objets et d'obturation du coffre à bagages, sans pour cela accroître le poids de ce hayon.

L'invention est caractérisée en ce que la structure et la surface précitée constituent une pièce monobloc à laquelle est fixée la partie vitrée.

Suivant un mode de réalisation préféré de l'invention, un élément formant enjoliveur et/ou renfort coiffe la structure précitée du côté extérieur de la porte en étant fixée à celle-ci par des organes accessibles depuis l'intérieur de ladite porte.

On ajoutera ici que l'élément précité ainsi que la structure délimitent un espace contenant avantageusement des équipements du véhicule.

Selon encore un autre mode de réalisation préféré de l'invention, la pièce monobloc structure-surface précitée présente en section transversale sensiblement la forme d'un U évasé et renversé dont l'une des branches comporte une concavité tournée du côté de l'enjoliveur ou renfort précité, dont la base sensiblement plane reçoit la partie vitrée, et dont l'autre branche forme la surface précitée.

On ajoutera encore ici que la pièce monobloc précitée est avantageusement réalisée en une matière synthétique.

Suivant un autre mode de réalisation, une pièce de fermeture est rapportée ou fixée sur la structure du côté intérieur de la porte, ladite pièce de fermeture délimitant avec la structure un espace contenant des équipements du véhicule.

L'invention vise également un véhicule équipé d'un hayon arrière répondant aux caractéristiques susmentionnées.

Mais d'autres avantages et caractéristiques de l'invention apparaîtront mieux dans la description détaillée qui suit et se réfère aux dessins annexés, donnés uniquement à titre d'exemple et dans lesquels:

la figure 1 est une vue schématique en élévation et coupe verticale suivant l'axe longitudinal médian du véhicule, de la partie arrière de ce véhicule équipé d'un hayon conforme aux principes de l'invention et représenté en position ouverte et fermée;

la figure 2 montre en coupe transversale la partie basse de ce hayon, et ce suivant l'axe de symétrie du véhicule;

la figure 3 représente une autre coupe transversale de la partie basse de ce hayon, cette coupe passant par l'un des organes de fixation de l'enjoliveur sur la porte; et

les figures 4 et 5 illustrent en coupe transversale et agrandie deux autres modes de réalisation de la partie basse d'un hayon selon l'invention.

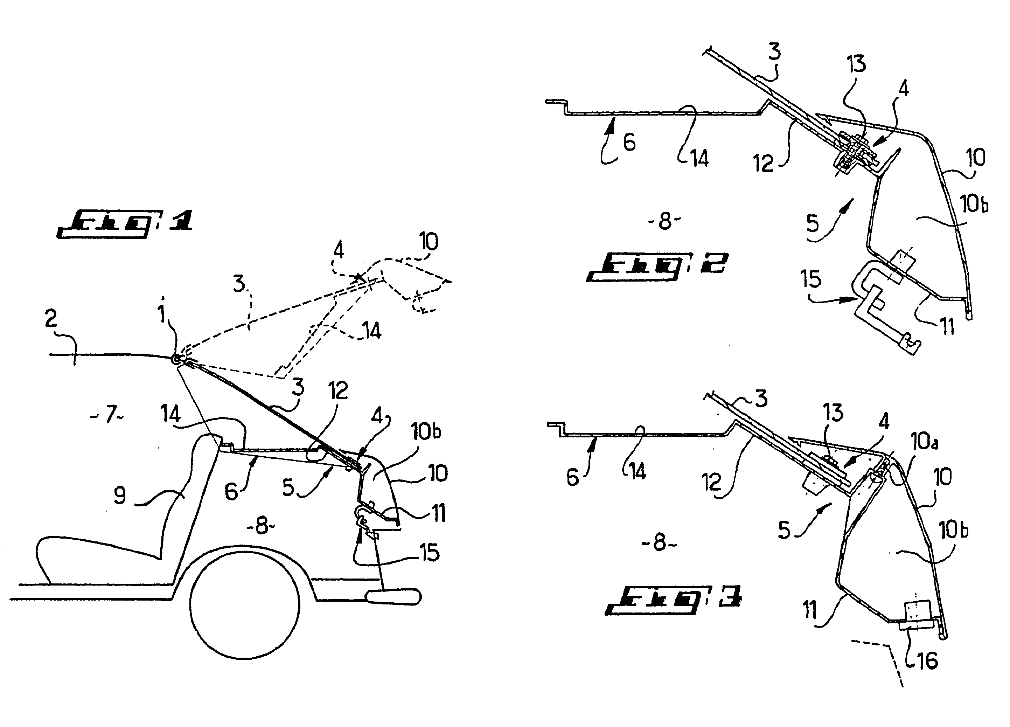

Suivant un exemple de réalisation et en se reportant aux dessins annexés, un hayon arrière conforme à l'invention est articulé par sa partie supérieure en 1 sur la caisse 2 d'un véhicule et se compose essentiellement d'une vitre galbée 3 solidaire en 4 d'une structure 5 qui est pourvue d'une surface 6 en saillie vers l'intérieur de l'habitacle 7 du véhicule pour constituer un aménagement fonctionnel de celui-ci, c'est-à-dire, comme on le voit sur la figure 1, un panneau de fermeture du coffre à bagages 8 et également un support d'objets ou de paquets derrière le siège 9.

Suivant une réalisation avantageuse, la structure 5 constitue avec la surface ou panneau 6 une pièce monobloc qui est de préférence réalisée en matière plastique.

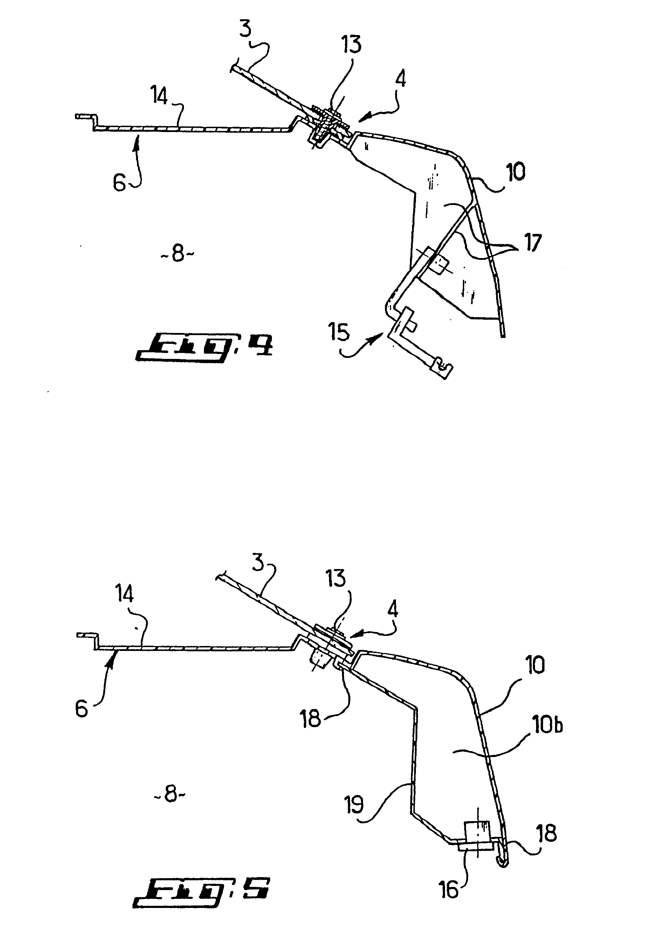

Selon l'exemple de réalisation montré sur les figures 2 et 3, un élément 10 jouant le rôle d'enjoliveur et/ou de renfort coiffe la partie basse de la structure 5 du côté extérieur du hayon en étant fixé à celui-ci par des organes, tels que par exemple des vis 10a accessibles depuis l'intérieur du véhicule, comme on le voit bien sur la figure 3. On ajoutera ici que l'enjoliveur 10 coiffe la partie basse du hayon et constitue un cache pour les moyens 4 de solidarisation de la vitre 3 à la structure 5.

La pièce monobloc ou structure 5 présente en section transversale sensiblement la forme d'un U évasé et renversé dont les divers éléments seront décrits en détail ci-après.

L'une 11 des branches du U présente une concavité tournée du côté de l'enjoliveur 10 de façon à ménager un espace 10b qui peut avantageusement contenir des équipements du véhicule.

2

La base 12 du U formant la pièce monobloc 5 reçoit et supporte la vitre 3 qui est fixée par des boulons et rondelles appropriés repérés d'une manière globale en 13.

L'autre branche 14 du U formant la piéce monobloc 5 constitue précisément la surface, paroi, tablette ou analogue 6 dont on a parlé précédemment et qui, en position fermée du hayon, constitue un panneau isolant le coffre à bagages 8 du restant de l'habitacle 7 du véhicule.

On a montré en 15 un dispositif de serrure pour assurer le verrouillage et le déverrouillage du hayon, ce dispositif étant en partie solidaire de la branche 11, de la pièce monobloc en U 5. On a également montré schématiquement en 16 sur la figure 3 une partie du système d'éclairage de la plaque d'immatriculation du véhicule, ce système, ainsi d'ailleurs que d'autres, tels que par exemple un moteur d'entraînement d'essuie-glace ou de pompe de lave-glace, pouvant avantageusement se loger dans l'espace ou volume 10b délimité par l'enjoliveur 10 et la branche 11 de la pièce monobloc 5, à la partie basse du hayon.

Suivant la variante de réalisation de la figure 4, l'élément 10, et la tablette 14 viennent de moulage avec des nervures 17 sur lesquelles peut être fixée une pièce de fermeture, le dispositif de serrure 15 étant par exemple solidaire desdites nervures.

Suivant la variante de la figure 5, une pièce de fermeture 19 est rapportée et fixée en 18 sur la structure moulée constituée par la tablette 14 et l'élément 10. On a utilisé sur les figures 4 et 5 les mêmes repères pour désigner les éléments communs à la réalisation des figures 2 et 3.

On a donc réalisé suivant l'invention un hayon arrière pour véhicule constitué d'un nombre minimum de pièces solidaires et dont l'assemblage et la forme judicieuse confèrent au hayon toutes les qualités requises de rigidité et de faible poids en lui faisant également jouer, en position fermée, le rôle d'un panneau susceptible de supporter des paquets ou analogues et d'obturer avantageusement la partie supérieure du coffre à bagages du véhicule.

Bien etendu, l'invention n'est nullement limitée au mode de réalisation décrit et illustré qui n'a été donné qu'à titre d'exemple. C'est ainsi que les organes de fixation 13 de la vitre 3 sur la pièce monobloc 5 peuvent être quelconques.

## Revendications

1. Porte de véhicule, tel que par exemple le hayon arrière d'un véhicule automobile et du type comprenant une partie vitrée (3) solidaire d'une structure (5) formant châssis de porte et pourvue d'au moins une surface (6) en saillie vers l'intérieur de l'habitacle (7) du véhicule pour constituer par exemple un support d'objets et/ou un panneau de fermeture du coffre à bagages (8), caractérisée en ce que la structure (5) et la surface (6) précitées constituent une pièce monobloc à laquelle est fixée la partie vitrée (3).

2. Porte selon la revendication 1, caractérisée en ce qu'un élément enjoliveur (10) coiffe la structure précitée (5) du côté extérieur de la porte en étant fixé à celle-ci par des organes (10a) accessibles depuis l'intérieur.

3. Porte selon la revendication 1, caractérisée en ce qu'une pièce de fermeture (19) est fixée sur la structure précitée du côté intérieur de la porte.

4. Porte selon l'une des revendications 1 à 3, caractérisée en ce que l'enjoliveur (10) et la structure (5) ou la pièce de fermeture (19) et ladite structure délimitent un espace (10b) contenant des équipements du véhicule.

5. Porte selon l'une des revendications 1 à 4, caractérisée en ce que la structure ou châssis (5) supportant la partie vitrée précitée (3) entoure partiellement celle-ci.

6. Porte selon l'une des revendications précédentes, caractérisée en ce que la pièce monobloc formant la structure (5) et la surface (6) précitées est réalisée en une matière synthétique.

7. Véhicule équipé d'une porte formant hayon arrière selon l'une quelconque des revendications 1 à 6.

## Patentansprüche

1. Fahrzeugtür wie z.B. die Rückwandtür eines Kraftfahrzeuges und derjenigen Gattung mit einem an einem einen Türrahmen bildenden Aufbau (5) angebrachten verglasten Teil (3), der mit wenigstens einer nach innen des Passagierraumes (7) des Fahrzeugs vorragenden Fläche (6) versehen ist, um z.B. eine Halterung für Gegenstände und/oder eine Platte zum Verschliessen des Gepäckraumes (8) zu bilden, dadurch gekennzeichnet, dass der vorgenannte Aufbau (5) und die vorgenannte Fläche (6) ein einstückiges Glied bilden, an welchem der verglaste Teil (3) befestigt ist.

2. Tür nach Anspruch 1, dadurch gekennzeichnet, dass ein Zierelement (10) den vorgenannten Aufbau (5) von der Aussenseite der Tür her bedeckt, wobei es an dieser durch von innen her zugängliche Glieder (10a) befestigt ist.

3. Tür nach Anspruch 1, dadurch gekennzeichnet, dass ein Verschlussstück (19) an dem vorgenannten Aufbau an der Innenseite der Tür befestigt ist.

.4. Tür nach einem der Ansprüche 1 bis 3, dadurch gekennzeichnet, dass das Zierelement (10) und der Aufbau (5) oder das Verschlussstück (19) und der besagte Aufbau einen Ausrüstungen des Fahrzeugs enthaltenen Raum (10b) abgrenzen.

5. Tür nach einem der Ansprüche 1 bis 4, dadurch gekennzeichnet, dass der den vorgenannten verglasten Teil (3) tragende Aufbau bzw. Rahmen (5) den verglasten Teil teilweise umgibt.

6. Tür nach einem der vorhergehenden Ansprüche, dadurch gekennzeichnet, dass das den vorgenannten Aufbau (5) und die vorgenannte Fläche (6) bildende einstückige Teil aus einem Kunststoff hergestellt ist.

7. Mit einer eine Rückwandtür nach irgendeinem der Ansprüche 1 bis 6 bildenden Tür ausgestattetes Fahrzeug.

**Claims**

1. Vehicle door such for instance as the back door of an automotive vehicle and of the kind comprising a glazed portion (3) solid with a structure (5) forming a door frame and provided with at least one surface (6) projecting inwards of the passenger space (7) of the vehicle to constitute for instance a support of objects and/or a panel for closing the luggage boot (8), characterized in that the aforesaid structure (5) and surface (6) constitute an integral part to which the glazed portion (3) is secured.

2. Door according to claim 1, characterized in that an embellishing element (10) covers the aforesaid structure (5) of the outside of the door while being secured to the latter by members (10a) accessible from the inside.

3. Door according to claim 1, characterized in that a shutting part (19) is secured to the aforesaid structure on the inside of the door.

4. Door according to one of claims 1 to 3, characterized in that the embellisher (10) and the structure (5) or the shutting part (19) and the said structure define a space (10b) containing equipments of the vehicle.

5. Door according to one of claims 1 to 4, characterized in that the structure or frame (5) supporting the aforesaid glazed portion (3) partially surrounds the latter.

6. Door according to one of the foregoing claims, characterized in that the integral part forming the aforesaid structure (5) and surface (6) is made from a synthetic material.

7. Vehicle fitted with a door forming a back door according to any one of claims 1 to 6.

FIG.1

FIG.2

-8-

FIG.3

-8-

-7-

~8~

Fig. 4

~8~

Fig. 5